# EUROPEAN PATENT APPLICATION

(11) **EP 4 773 387 A1**
(43) Date of publication of application: **08.07.2026**
(21) Application number: 25222605.5
(22) Date of filing: 11.12.2025
(51) Int. Cl.: H01M 50/342, H01M 50/107, H01M 50/325, H01M 50/536, H01M 50/578

(54) **SECONDARY BATTERY AND ELECTRONIC DEVICE**

(30) Priority: 25.12.2024 CN 202423217217 U
(71) Applicant: AESC Japan Ltd., Yokohama-shi, Kanagawa 220-0012 (JP)
(72) Inventor: LI, Qiankun, Jiangyin City, Wuxi City, 214443 (CN)
(74) Representative: Becker, Eberhard

(57) **Abstract**

A secondary battery (500) and an electronic device (400) are provided. The secondary battery (500) includes a housing (600), an electrode assembly (700), and a current-collecting plate (902). The housing (600) includes an end wall configured with an explosion-proof valve (904). The electrode assembly (700) is accommodated within the housing (600), with a tab (716) extending from an end of the electrode assembly (700) facing the explosion-proof valve (904). The current-collecting plate (902) is welded to the tab (716) and includes a first opening (102) passing through the center thereof and multiple second openings (104). The first opening (102) extends in a radial direction of the current-collecting plate (902). The second openings (104) are distributed on both sides of the first opening (102). A portion between end portions of the second openings (104) close to the first opening (102) and the first opening (102) constitutes a tearable portion (108).

## Description

### BACKGROUND

### Technical Field

The present disclosure relates to batteries, and specifically relates to a secondary battery and an electronic device.

### Description of Related Art

In some secondary batteries, an explosion-proof valve is mounted on an end wall of a battery housing. The function of the explosion-proof valve is to release an internal pressure in the event of an abnormal pressure increase within the battery, thereby preventing an explosion. Furthermore, to effectively collect and conduct current, some secondary batteries are provided with a current-collecting plate. This current-collecting plate is arranged in correspondence with the explosion-proof valve. Under extreme conditions, when the explosion-proof valve is opened, some current-collecting plates are designed to tear and fold to enhance the pressure relief effect, thereby allowing the pressure-releasing airflow and any ejected internal materials to pass by with reduced obstruction.

### SUMMARY

Given the above disadvantages of the related art, the present disclosure provides a secondary battery and an electronic device. When an explosion-proof valve opens, each blade of a current-collecting plate opens easily, and it is easier to maintain planarity between coplanar blades.

A secondary battery provided by a first aspect of the present disclosure includes a housing, an electrode assembly, and a current-collecting plate. The housing includes an end wall, and an explosion-proof valve is disposed on the end wall. The electrode assembly is accommodated in the housing, and a tab is extended from one end of the electrode assembly facing the explosion-proof valve. The current-collecting plate is welded with the tab. The current-collecting plate includes a first opening and multiple second openings. The first opening passes through the center of the current-collecting plate and extends along a radial direction of the current-collecting plate. The multiple second openings are distributed on both sides of the first opening. A portion between end portions of the second openings close to the first opening and the first opening constitutes a tearable portion of the current-collecting plate. When an internal pressure of the secondary battery increases and releases pressure through the explosion-proof valve, the current-collecting plate tears at the tearable portion and folds toward a direction away from the electrode assembly.

Optionally, the current-collecting plate has two second openings extending along the radial direction of the current-collecting plate, and the first opening and the second openings divide the current-collecting plate into four circumferential regions that may fold separately. According to the technical solution, only one tearable portion needs to be torn to complete rapid folding of two blades of the current-collecting plate with nearly half the area, further improving the simplicity and response speed of tearing and folding each blade, making the pressure-releasing airflow channel more unobstructed.

Optionally, the current-collecting plate has four second openings extending along the radial direction of the current-collecting plate, and the first opening and the second openings divide the current-collecting plate into six circumferential regions that may fold separately. In some technical solutions, the folding of each blade of the current-collecting plate may be limited by the dimension of the opening of the explosion-proof valve. As the current-collecting plate is divided into more blades in the circumferential direction, the angle at which each blade may fold and open also increases accordingly, thereby contributing more to maintaining the unobstructed pressure-releasing channel. In the meantime, the quantity of second openings should not be excessive. Excessive quantity of the second openings may lead to an increase in the average quantity of tearable portions that need to be torn for folding each blade, and the current-collecting plate is not easy to be processed. Therefore, uniformly setting four second openings is a relatively preferred solution.

Optionally, the first opening has a central opening at a position corresponding to the center of the current-collecting plate. The central opening has multiple corners, and the multiple corners are respectively disposed toward end portions of the multiple second openings close to the first opening. According to the technical solution, the corners may increase stress concentration at this position, making the tearable portion to be torn more easily, and the tearing pattern tends to be in a direction of a line from the central opening to the end portion of the second opening.

Optionally, a maximum straight line distance between outer edges of the multiple corners of the central opening is a radial dimension d₁ of the central opening, and the radial dimension of the central opening is d₁≥8 mm. Particularly, an opening angle of each corner of the central opening is θ, and 45°≤θ≤90°. Due to the presence of sharp corners, a mold used for processing this current-collecting plate is prone to edge wear and cracking during the processing process. According to the technical solution, when the radial dimension of the central opening is d₁≥8 mm and the opening angle θ of the corners satisfies 45°≤θ≤90°, a service life of the mold used for processing the current-collecting plate may be effectively improved, avoiding the increase of foreign matter caused by mold wear.

Optionally, the center of the electrode assembly includes an electrode assembly central opening. A diameter of the electrode assembly central opening is d₂, with a maximum straight line distance between the outer edges of the multiple corners as the radial dimension d₁ of the central opening, wherein d₁>d₂. According to the technical solution, the electrode assembly central opening typically constitutes a channel for pressure-releasing airflow, while substances including electrolyte, particles and other materials mainly eject from an outer periphery of the channel. By configuring d₁ as d₁>d₂, substances such as electrolyte and particles may directly impact the corners, increasing an impact force on the corners, making the tearable portion easier to tear from the corners.

Optionally, multiple weld marks are formed by welding between the current-collecting plate and the tab, and a width of each of the weld marks is W≤1 mm. According to the technical solution, when the tab is peeled, the width of a single weld mark is W≤1 mm, which makes the peeling force required in the initial stage of peeling relatively small, and as the peeling process proceeds, because the width of the single weld mark is relatively small, the increase of peeling force during the peeling process is also more gradual, making the peeling process advance progressively.

Optionally, multiple weld marks are formed by welding between the current-collecting plate and the tab, including multiple straight line weld marks. According to the technical solution, the straight line weld marks may make the peeling force required in the initial stage of folding and tab peeling relatively small, only requiring peeling of an end portion of the straight line weld marks. Moreover, during the peeling process, the line width of the straight line weld marks remains almost unchanged, and a magnitude of the peeling force during the peeling process also remains basically unchanged. By combining multiple the straight line weld marks, while taking into account welding reliability, the peeling force during the peeling process may produce a gradual gradient from small to large, making the peeling process easier to proceed in an expected manner.

Optionally, a contour of a weld mark group is constituted by a connection line between weld marks and end portions of the weld marks in the weld mark group, and the contour has corners that are close to and face the center of the current-collecting plate. Further, the first opening and the second openings divide the current-collecting plate into multiple circumferential regions along the circumferential direction, and the multiple straight line weld marks are divided into multiple weld mark groups according to the circumferential regions where they are located. Each of the weld mark groups includes a central weld mark and multiple side weld marks, with the central weld mark disposed at the center of the circumferential regions along the circumferential direction, and the side weld marks symmetrically distributed on both sides of the central weld mark. According to the technical solution, such symmetrically arranged weld mark groups make the peeling force that needs to be resisted for folding of each blade (i.e., each circumferential region) of the current-collecting plate symmetrical, which may further guide the folding direction of each blade, making each blade of the current-collecting plate tend to fold along the extending direction of the central weld mark.

Optionally, in each of the weld mark groups, compared to the side weld marks, an end portion of the central weld mark is at a closest distance to the central opening of the current-collecting plate, and a length of the central weld mark is d₃≥10 mm. According to the technical solution, by configuring the end portion of the central weld mark to be at the closest distance to the central opening of the current-collecting plate, because the folding process of each blade typically starts from peeling and folding near the central opening, when folding begins, it is only necessary to peel the welding fixation at the end portion of the central weld mark, making the initial peeling force that needs to be resisted to initiate folding relatively small. Configuring the length d₃ of the central weld mark as d₃≥10 mm may reduce internal resistance.

Optionally, each of the weld mark groups includes multiple side weld marks located apart at different distances to the central weld mark, and the side weld marks that are farther from the central weld mark are also farther from the central opening. According to the technical solution, during the process of folding each blade and peeling the tab, on one hand, due to the guidance of the symmetrical structure, the folding and peeling process of the tab tends to proceed along a direction of a central axis, and on the other hand, when the folding and peeling of the tab proceeds along the direction of the central axis, the peeling is carried out sequentially to positions where new side weld marks need to be peeled, thereby making the magnitude of the peeling force required for the folding and peeling process gradually increase rather than suddenly increase, making the folding and peeling process easier to advance progressively.

Optionally, a capacity of the secondary battery is G Ah, a total area of the weld marks is S, and S≥G/8 mm². According to the technical solution, the larger the weld mark area, the larger the area of a conductive current portion between the current-collecting plate and the tab may be, thereby reducing contact resistance.

Optionally, a projection area of the explosion-proof valve on the current-collecting plate along a height direction of the secondary battery is an explosion-proof valve projection range, and both the first opening and the second openings extend outward along the radial direction of the current-collecting plate to the outside of the explosion-proof valve projection range. According to the technical solution, configuring the first opening and the second openings to extend to the outside of the explosion-proof valve projection range may utilize the area of the explosion-proof valve as much as possible as a pressure-releasing channel, thereby improving a cross-sectional dimension of the pressure-releasing channel.

Optionally, the current-collecting plate further has a positioning hole. Further, the positioning hole is disposed at an outer end of the second openings along the radial direction of the current-collecting plate.

A second aspect of the present disclosure provides an electronic device having the secondary battery described in the first aspect of the present disclosure.

### BRIEF DESCRIPTION OF THE DRAWINGS

FIG. 1 is a structural schematic diagram of a negative electrode current-collecting plate used in a columnar battery.
FIG. 2 is a structural schematic diagram of a secondary battery provided in some embodiments of the present disclosure.
FIG. 3 shows a laminated structure of an electrode assembly provided in some embodiments of the present disclosure.
FIG. 4 is a structural schematic diagram (front view) of a negative electrode current-collecting plate of a secondary battery provided in a first embodiment of the present disclosure.
FIG. 5 is a structural schematic diagram (front view) of a negative electrode current-collecting plate of a secondary battery provided in a second embodiment of the present disclosure.
FIG. 6 is a structural schematic diagram (front view) of a negative electrode current-collecting plate of a secondary battery provided in a third embodiment of the present disclosure.
FIG. 7 is a schematic diagram showing a physical quantity represented by a width W of weld marks in some embodiments of the present disclosure.
FIG. 8 is a schematic diagram of an electronic device in an embodiment of the present disclosure.

### DESCRIPTION OF THE EMBODIMENTS

The technical solutions in the embodiments of the present disclosure will be described clearly and thoroughly below in conjunction with the drawings in the embodiments of the present disclosure. Obviously, the described embodiments are only part of the embodiments of the present disclosure, not all of the embodiments. Based on the embodiments in the present disclosure, all other embodiments obtained by those of ordinary skill in the art without making creative efforts fall within the scope to be protected by the present disclosure.

When numerical ranges are provided in the embodiments, it should be understood that, unless otherwise specified in the present disclosure, both endpoints of each numerical range and any numerical value between the two endpoints may be selected. Unless otherwise defined, all technical and scientific terms used in the present disclosure are consistent with the technical personnel's mastery of the related art in the technical field and the description of the present disclosure. Any methods, equipment and materials of the related art that are similar or equivalent to the methods, equipment and materials described in the embodiments of the present disclosure may also be used to implement the present disclosure.

### <Terms and Explanations>

The terms such as "upper", "lower", "left", "right", "middle" and "one" referenced in this specification are also merely for the clarity of description and are not used to limit the scope in which the present disclosure may be implemented. Changes or adjustments to their relative relationships, without substantial changes to the technical content, shall also be regarded as the scope in which the present disclosure may be implemented.

The term "tearable portion" refers to a region that has relatively lower strength compared to other surrounding regions and is prone to stress concentration and tearing at that location.

Terms such as "radial" and "circumferential" are relative to the axis of the described object, and are not used to limit the described object to being circular. For example, for an elongated object with an elliptical cross-section, the so-called "axis" is the line connecting the intersection points of the major and minor axes of each elliptical cross-section. For an elongated object with a rectangular cross-section, the so-called "axis" is the line connecting the intersection points of the diagonals of each rectangular cross-section.

The term "blade" refers to a unit of a current-collecting plate that may be separately folded and opened. In some embodiments, a blade may be equivalent to a "circumferential region" of the current-collecting plate.

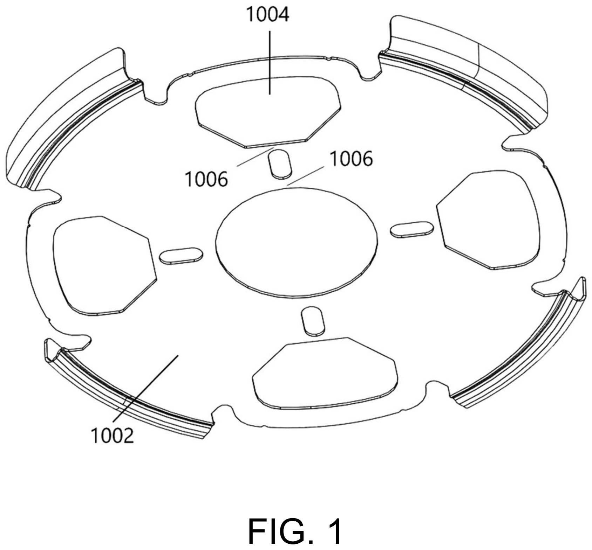

FIG. 1 is a structural schematic diagram of a current-collecting plate. Referring to FIG. 1, the current-collecting plate includes four circumferentially and uniformly distributed foldable blades 1002. The blades 1002 are connected to each other by tearable portions 1006 that are prone to stress concentration, and weight reduction holes 1004 are provided between the blades 1002. However, a current-collecting plate with such structure requires tearing 4 tearable portions 1006 to allow one blade 1002 to fold, making it difficult for the 4 blades 1002 to be completely torn and folded. In addition, the weight reduction holes 1004 on the current-collecting plate will weaken the impact force that causes each blade 1002 to fold, making it more difficult for some blades 1002 to fold and open. Furthermore, due to the uncertainty of the incident location that causes extreme conditions, the pressure-releasing airflow will not flow out exactly in a direction of a central axis. Correspondingly, a main force-bearing portion of the current-collecting plate may deviate to a specific degree relative to the central axis. In this situation, it is more likely that some blades 1002 are opened while some blades 1002 cannot be opened due to insufficient force, causing obstruction to the pressure-releasing airflow.

There is also another type of current-collecting plate that similarly includes multiple foldable blades, but the blades of such current-collecting plate are not fixed onto each other. Although each blade of such current-collecting plate does not require tearing before folding, because the blades are not fixed onto each other, it is difficult to maintain the planarity between the blades during processing and transportation, which is not conducive to processing, especially prone to causing false welding problems during the welding process.

### <Secondary Battery>

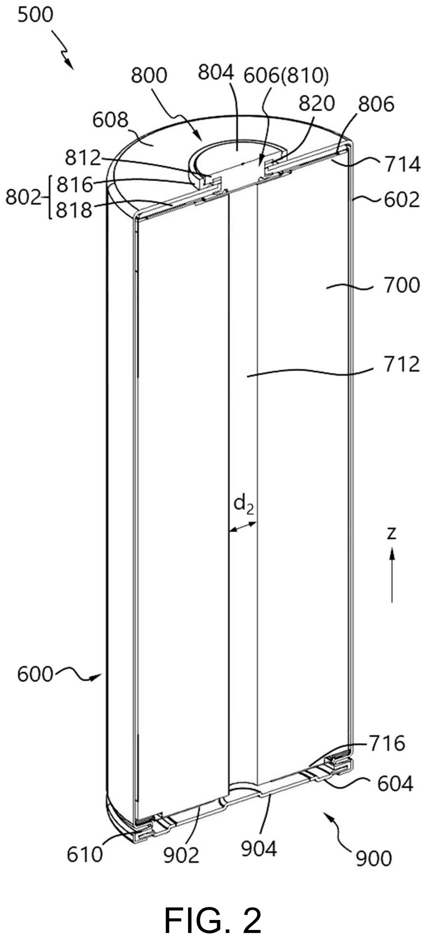

The structural schematic diagram of a secondary battery 500 provided in some embodiments of the present disclosure is shown in FIG. 2. The secondary battery 500 may be, for example, a columnar battery, and mainly includes a housing 600, an electrode assembly 700, a positive electrode assembly 800, and a negative electrode assembly 900. The electrode assembly 700 is disposed inside the housing 600. The positive electrode assembly 800 is disposed at the center of an upper end of the housing 600 and is electrically isolated from the housing 600 by an insulating sealing member 802. The negative electrode assembly 900 is disposed at a lower end of the housing 600, and the negative electrode assembly 900 is electrically connected to the housing 600.

The following is divided into several parts to individually introduce the structural, material and functional features of each component of the secondary battery 500 in some embodiments of the present disclosure.

### <Housing>

A shape of the housing 600 is a shape capable of effectively accommodating the wound-type electrode assembly 700, for example, a columnar shape. A material of the housing 600 may be metal, for example, steel or aluminum with good thermal conductivity. Steel is a preferable option, and the steel housing 600 has a good strength, thereby being capable of effectively suppressing the expansion of a battery cell and more suitable for high-energy systems such as silicon-carbon negative electrodes, and the secondary battery 500 itself may serve as a supporter for structural components.

The housing 600 includes an outer can 602 and a cover plate 604. The outer can 602 is a columnar can body, and an end plate 608 is integrally formed or connected at the top of the can body. A positive electrode terminal opening 606 is provided at the center of the end plate 608, and the positive electrode assembly 800 including a positive electrode terminal 804 passes through the positive electrode terminal opening 606 and is designed to protrude from the top of the columnar can body. The bottom of the outer can 602 is sealed by the cover plate 604. Specifically, after the electrode assembly 700 is placed into the outer can 602, the negative electrode assembly 900 is disposed at the other end of the outer can 602, electrolyte is injected, the cover plate 604 is arranged for sealing to obtain the secondary battery 500.

The specific dimensions of the outer can 602 may be determined according to the dimensions of the electrode assembly 700, for example, may be an outer can 602 with a diameter of 46 mm or more and a height of 80 mm or more. A thickness of the outer can 602 may be 0.2 to 0.6 mm, and a surface thereof may be nickel-plated to prevent corrosion and rust.

After placing the electrode assembly 700 into the outer can 602, a rolling groove 610 may be made by a rolling knife around the housing 600 for one circumference near an opening of the outer can 602. The rolling groove 610 is recessed inward from a side wall surface of the outer can 602, thereby limiting a position of the electrode assembly 700, and preventing the electrode assembly 700 from moving in a height direction Z of the secondary battery 500.

### <Electrode Assembly>

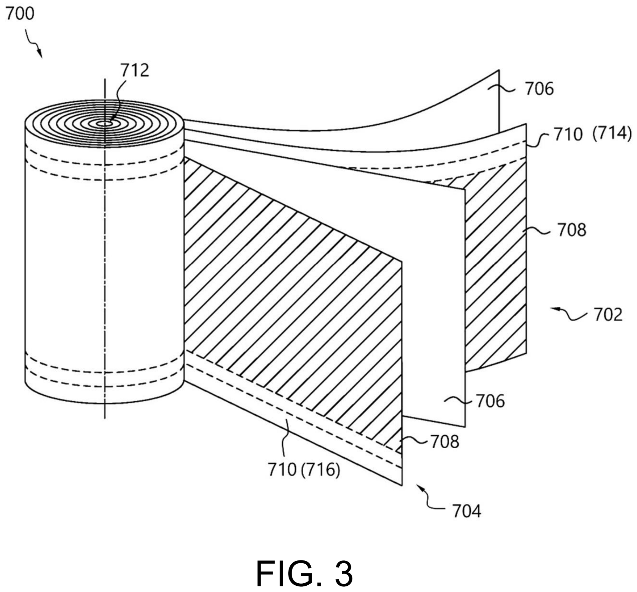

Referring to FIG. 3, the electrode assembly 700 of the columnar battery cell is made in a wound form. Specifically, a positive electrode sheet 702, a negative electrode sheet 704, and a separator 706 are overlapped and then wound to form a wound core. The separator 706 is disposed between the positive electrode sheet 702 and the negative electrode sheet 704 to prevent direct contact between the two and avoid short circuit. Both the positive electrode sheet 702 and the negative electrode sheet 704 include substrates formed by a metal foil, coated regions 708 coated with an active material, and uncoated regions 710 not coated with the active material. The substrate of the positive electrode sheet 702 is an aluminum foil, and a main body thereof, i.e., a lower portion of the substrate, is coated with a positive electrode active material. The substrate of the negative electrode sheet 704 is a copper foil, and a main body thereof, i.e., an upper portion of the substrate, is coated with a negative electrode active material. The uncoated regions 710 of the positive electrode sheet 702 and the negative electrode sheet 704 are disposed at opposite ends to prevent contact between the two from causing conduction short circuit between positive and negative electrodes. It should be noted that FIG. 3 is only exemplary, and in other embodiments of the present disclosure, the uncoated region 710 of the positive electrode sheet 702 may also be disposed at the bottom of the electrode assembly 700, while the uncoated region 710 of the negative electrode sheet 704 may be disposed at the top of the electrode assembly 700, which is not limited by the present disclosure.

The top of the positive electrode sheet 702 is not coated with the active material and is used as a positive tab 714 for electrical connection. The bottom of the negative electrode sheet 704 is not coated with the active material and is used as a negative tab 716 for electrical connection. In some embodiments, the metal foil substrate of the uncoated region 710 may be cut into multiple flag electrodes (not shown in the figure), and the flag electrodes are folded toward an electrode assembly central opening 712 of the electrode assembly 700 and then welded to the current-collecting plate.

The wound core has the electrode assembly central opening 712 at the center, which is a position where a central roller is located during a wound core manufacturing process. After the wound core manufacturing is completed, the central roller is withdrawn, leaving the electrode assembly central opening 712. The electrode assembly central opening 712 may allow a welding rod to pass through during the process of welding the positive electrode terminal 804 and a positive electrode current-collecting plate 806, and may also provide a channel for releasing the pressure of gas generated during thermal runaway.

In a chamber of the housing 600 for accommodating the electrode assembly 700, electrolyte is also injected. The electrolyte uses a non-aqueous electrolyte containing a non-aqueous solvent and an electrolyte salt dissolved in the non-aqueous solvent. For the non-aqueous solvent, for example, esters, ethers, nitriles, amides, and mixed solvents of two or more of them may be used. The non-aqueous solvent may also contain halogen substitutes obtained by substituting at least a portion of hydrogen in these solvents with halogen atoms such as fluorine. Furthermore, the non-aqueous electrolyte is not limited to liquid electrolyte, and may also be a solid electrolyte using gel polymer or the like. For the electrolyte salt, lithium salts such as LiPF₆ may be used. As the non-aqueous solvent, examples include propylene carbonate, ethylene carbonate, diethyl carbonate, dimethyl carbonate, dipropyl carbonate, dimethyl sulfoxide, acetonitrile, dimethoxyethane, diethoxyethane, tetrahydrofuran, N-methyl-2-pyrrolidone, ethyl methyl carbonate, γ-butyrolactone, or mixtures thereof.

The positive electrode active material has lithium-containing metal composite oxide as a main component. As metal elements contained in the lithium-containing metal composite oxide, examples including Ni, Co, Mn, Al, B, Mg, Ti, V, Cr, Fe, Cu, Zn, Ga, Sr, Zr, Nb, In, Sn, Ta, W, etc. may be listed. One example of a preferred lithium-containing metal composite oxide is a composite oxide containing at least one of Ni, Co, Mn, and Al. The positive electrode active material may be, for example, lithium cobalt oxide, lithium iron phosphate, ternary lithium, or lithium manganese oxide.

The positive electrode active material also contains a conductive agent and a binder. The conductive agent may be, for example, carbon materials such as carbon black, acetylene black, Ketjen black, or graphite. The binder may be, for example, fluorine resins such as polytetrafluoroethylene (PTFE) or polyvinylidene fluoride (PVDF), polyacrylonitrile (PAN), polyimide, acrylic resin, polyolefin, etc. These resins may also be used in combination with cellulose derivatives such as carboxymethyl cellulose (CMC) or salts thereof, polyethylene oxide (PEO), etc.

In the negative electrode active material, carbon materials that may reversibly absorb and release lithium ions are used. Preferred carbon materials are graphite such as natural graphite including flaky graphite, massive graphite, and earthy graphite, and artificial graphite such as massive artificial graphite and graphitized mesocarbon microbeads. In a negative electrode mixture layer, Si-containing compounds may also be included as the negative electrode active material. Additionally, in the negative electrode active material, metals that form lithium alloys other than Si, alloys containing such metals, compounds containing such metals, etc. may also be used.

In the binder used for the negative electrode active material, similarly to the positive electrode active material, fluorine resins, polyacrylonitrile, polyimide resins, acrylic resins, polyolefin resins, etc. may also be used, with styrene-butadiene rubber (SBR) or modified forms thereof being preferably used. The negative electrode active material may include, in addition to SBR and the like, carboxymethyl cellulose or salts thereof, polyacrylic acid (PAA) or salts thereof, polyvinyl alcohol, etc.

The separator 706 uses a porous sheet having ion permeability and insulating properties. The porous sheet may be a porous film, woven fabric, nonwoven fabric, etc. The material of the separator 706 is preferably olefin resins such as polyethylene and polypropylene, cellulose, etc. The separator 706 may have either a single-layer structure or a laminated structure. A heat-resistant layer or the like may also be formed on a surface of the separator 706.

### <Positive Electrode Assembly>

The positive electrode assembly 800 includes the positive electrode terminal 804, the insulating sealing member 802, and the positive electrode current-collecting plate 806.

The positive electrode terminal 804 is typically fixed in the positive electrode terminal opening 606 of the housing 600 by riveting. The riveting method may involve the terminal extending into the interior of the housing 600 and being riveted on an inner side of the housing 600, or may involve the terminal extending from the interior of the housing 600 and being riveted on the exterior of the housing 600. The material of the positive electrode terminal 804 is generally aluminum.

The positive electrode terminal 804 includes a terminal body 810, an upper flange 812, and a lower flange 814. The upper flange 812 is disposed at one end of the terminal body 810, the lower flange 814 is disposed at the other end of the terminal body 810, and both the upper flange 812 and the lower flange 814 protrude outward from the terminal body 810 in the radial direction. In some embodiments, the housing 600 is electrically connected to the negative electrode of the electrode assembly 700. To electrically isolate the positive electrode terminal 804 from the housing 600, the insulating sealing member 802 is also provided. The insulating sealing member 802 includes an upper insulating member 816, a lower insulating member 818, and a sealing ring 820. The upper insulating member 816 is disposed between the upper flange 812 and the end plate 608 of the housing 600, the lower insulating member 818 is disposed between the end plate 608 of the housing 600 and the lower flange 814 or between the end plate 608 of the housing 600 and the positive tab 714, and the sealing ring 820 is disposed between the end plate 608 and the positive electrode terminal 804.

Each positive tab 714 of the electrode assembly 700 is welded to the positive electrode current-collecting plate 806, and the positive electrode current-collecting plate 806 is welded and fixed onto the positive electrode terminal 804, so that current is transmitted to the positive electrode terminal 804 after being collected through the current-collecting plate.

### <Negative Electrode Assembly>

The negative electrode assembly 900 at least includes a negative electrode current-collecting plate 902 and an explosion-proof valve 904 integrally formed on the cover plate 604. In some embodiments of the present disclosure, the negative tab 716 of the electrode assembly 700 is welded to the negative electrode current-collecting plate 902, and the negative electrode current-collecting plate 902 is welded and fixed onto the rolling groove 610 of the housing 600, thereby making the negative electrode of the electrode assembly 700 and the housing 600 conductive. In other embodiments of the present disclosure, the negative electrode current-collecting plate 902 may also be directly welded and fixed onto the cover plate 604.

A fragile portion may be disposed on the cover plate 604 to serve as the explosion-proof valve 904. In some embodiments of the present disclosure, the explosion-proof valve 904 is disposed at the center of the cover plate 604 at the negative electrode. Specifically, through stamping or subtractive processing, for example, making grooves or through holes in the circumferential direction of the cover plate 604, a circular or other suitably shaped explosion-proof valve 904 may be obtained. The explosion-proof valve 904 may open to release pressure when internal pressure rises sharply, thus preventing battery explosion.

### <First Embodiment>

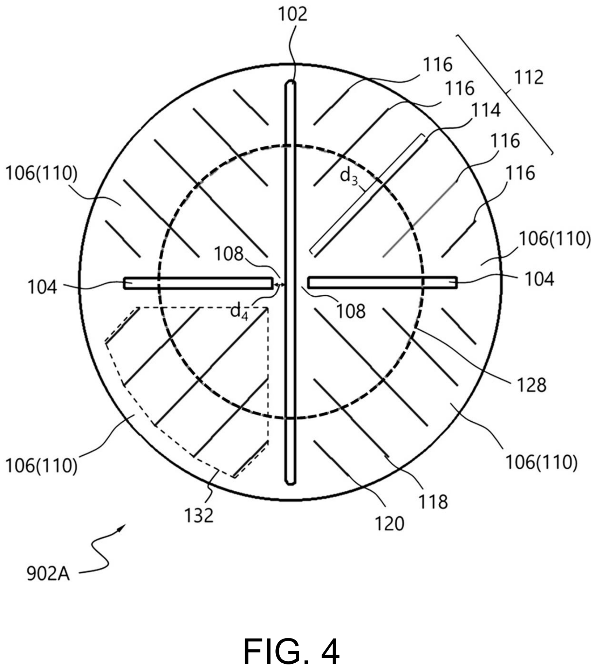

In the secondary battery provided in this embodiment, the negative electrode current-collecting plate 902A thereof is configured with the structure as shown in FIG. 4.

In the first embodiment of the present disclosure, the negative electrode current-collecting plate 902A is circular and includes one first opening 102 and two second openings 104.

The first opening 102 is a straight-type opening that extends in a radial direction of the circular negative electrode current-collecting plate 902A. A length of the first opening 102 is slightly smaller than a diameter of the negative electrode current-collecting plate 902A. In other words, both ends of the first opening 102 are adjacent to an outer edge of the negative electrode current-collecting plate 902A and still spaced apart at a specific distance. The second openings 104 are also straight-type openings. The two second openings 104 also extend along the radial direction of the negative electrode current-collecting plate 902A and are uniformly distributed on both sides of the first opening 102. The extension direction of the second openings 104 is perpendicular to the first opening 102. One first opening 102 and two second openings 104 uniformly divide the negative electrode current-collecting plate 902A in the circumferential direction into four blades 106, each with a circumferential angle of 90°. At the center of the negative electrode current-collecting plate 902A, a portion between end portions of the second openings 104 close to the first opening 102 and the first opening 102 constitutes a tearable portion 108 of the negative electrode current-collecting plate 902A. The two blades 106 located on the same side of the first opening 102 are connected to each other through the tearable portion 108.

It should be noted that although the first opening 102 and the second openings 104 are straight-type openings in this embodiment, they are not limited thereto. In other embodiments of the present disclosure, the first opening 102 and the second openings 104 may also be openings in the form of broken lines or curves. Correspondingly, their extension directions are the general extension directions of the broken lines or curves.

When the internal pressure of the secondary battery 500 increases and releases pressure through the explosion-proof valve 904, the negative electrode current-collecting plate 902A tears at the tearable portion 108 and folds toward a direction away from the electrode assembly 700, that is, folds downward as shown in FIG. 2. Each of the negative electrode current-collecting plates 902A provided in this embodiment has only two tearable portions 108 arranged correspondingly. When any one of the two tearable portions 108 tears, the torn tearable portion 108 may correspondingly fold two blades 106 (equivalent to opening nearly half the area of the negative electrode current-collecting plate 902A) of the negative electrode current-collecting plate 902A. After both of the two tearable portions 108 tear, all four blades 106 may correspondingly fold. In other words, in this embodiment, the quantity of tearable portions 108 required to be torn for folding each blade 106 is 0.5 on average. Compared with the technical solution in the related art that requires tearing four tearable portions to fold one blade, the negative electrode current-collecting plate 902A provided in this embodiment may effectively reduce the quantity requirement of the tearable portions 108 that need to be torn for folding each blade 106, making each blade 106 easier to open under the impact of pressure-releasing airflow. In addition, because the blades 106 of the negative electrode current-collecting plate 902A are connected to each other by the tearable portions 108 at the middle portion of the negative electrode current-collecting plate 902A, during processing and transportation, the planarity between the coplanar blades 106 may still be maintained by the tearable portions 108. In this way, when the negative electrode current-collecting plate 902A and the negative tab 716 are welded together, both of them may still be firmly welded and fixed, avoiding false welding problems.

According to the technical solution, each blade of the current-collecting plate only needs to tear one or two tearable portions to fold freely, reducing the quantity of tearable portions that need to be torn for one blade to fold freely, making each blade easier to open under the impact of pressure-releasing airflow.

It should be noted that in this embodiment, the shape of the end portions of the second openings 104 close to the first opening 102 is a neatly cut square corner, but the present disclosure is not limited thereto. In other embodiments of the present disclosure, the end portions of the second openings 104 close to the first opening 102 may also be various other different shapes to adapt to different battery design requirements and pressure-releasing requirements. For example, in some embodiments, the end portions of the second openings 104 close to the first opening 102 may also be configured as a rounded corner or a sharp corner pointing at the center of the negative electrode current-collecting plate 902A, etc.

Continuing to refer to FIG. 4, in this embodiment, the negative electrode current-collecting plate 902A is uniformly divided by the first opening 102 and the second openings 104 into four blades 106, i.e., four circumferential regions 110 uniformly distributed circumferentially. The negative electrode current-collecting plate 902A is welded and fixed onto the negative tab 716 at least through multiple straight line weld marks. The multiple straight line weld marks are similarly divided into four weld mark groups 112. Each of the weld mark groups 112 includes one central weld mark 114 and multiple side weld marks 116. The central weld mark 114 is the longest one in the weld mark group 112, centrally disposed at the center of each blade 106, and the side weld marks 116 are symmetrically distributed on both sides of the central weld mark 114. Here "centrally" means being located at the center of the circumferential regions 110 along the circumferential direction of the negative electrode current-collecting plate 902A. In other embodiments, in each of the weld mark groups 112, two or more of the central weld mark 114 may also be provided. Specifically, in this embodiment, each blade 106 is a sector occupying a 90° circumferential angle. The central weld mark 114 is centrally disposed and extends along the radial direction, further dividing each blade 106 into two sectors with 45° circumferential angles. The two side weld marks 116 are disposed on both sides of the central weld mark 114. Each of the side weld marks 116 is parallel to the central weld mark 114 and substantially equidistant to improve the distribution uniformity of the welded portions and improve the integrity and reliability of welding of the negative tab 716. Moreover, during the folding process of each blade 106, this symmetrically arranged weld mark groups 112 may provide symmetrical peeling force distribution, which may further guide the folding direction of each blade 106, making each blade 106 tend to fold along the extending direction of the central weld mark 114.

By setting the central weld mark 114 to be the longest, specifically, an inner end portion along a radial direction of the central weld mark 114 is configured to be closer to the center of the negative electrode current-collecting plate 902A relative to inner end portions of the side weld marks 116, it is possible to reduce the magnitude of the initial peeling force required to be overcome for initiating folding of each blade 106. Specifically, because the folding process of each blade 106 generally starts from the tearing and folding of the tearable portion 108, i.e., the folding generally starts from the center of the negative electrode current-collecting plate 902A, when folding begins, due to the gradient in a distance between the central weld mark 114 and the side weld marks 116 from the center of the negative electrode current-collecting plate 902A, the initiation of folding of each blade 106 does not need to resist a bonding force of multiple weld marks, but only needs to resist or destroy a bonding force at the inner end portion along the radial direction of the central weld mark 114. In this way, it is possible to significantly reduce the magnitude of the initial peeling force required to be resisted for initiating folding. More preferably, a length d₃ of the central weld mark 114 is configured as d₃≥10 mm, and the central weld mark 114 in this preferred length range may also increase the number of turns of the negative tab 716 welded onto the negative electrode current-collecting plate 902A, thus reducing the internal resistance of the secondary battery.

Similarly, continuing to refer to FIG. 4, a contour 132 of the weld mark group is formed by the weld marks (including the central weld mark 114 and the side weld marks 116) in the weld mark group 112 and connecting lines of the end portions of the weld marks. The contour 132 has a corner that is close to and faces the center of the negative electrode current-collecting plate 902A, i.e., an upper right corner of the contour 132 of the weld mark group in FIG. 4. Through the above method, the bonding force that needs to be resisted for the initiation of folding of each blade 106 is smaller, thereby reducing the magnitude of the initial peeling force required to be resisted for initiating folding, and rendering the increase in the peeling force more gradual.

The side weld marks 116 include a first side weld mark 118 and a second side weld mark 120. Compared to the second side weld mark 120, the first side weld mark 118 is closer to the central weld mark 114. Compared to the second side weld mark 120, an inner end portion along a radial direction of the first side weld mark 118 is closer to the center of the negative electrode current-collecting plate 902A. In other words, among the multiple side weld marks 116, the side weld marks 116 that are farther from the central weld mark 114 are also farther from the center of the current-collecting plate 902A. Through the above configuration, on one hand, due to the guidance of the symmetrical structure of the weld mark groups 112, the folding and peeling process of the blade 106 tends to be carried out along the direction of the central weld mark 114, and on the other hand, when guided to peel along the direction of the central weld mark 114, due to the gradient in the distance from different side weld marks 116 to the center of the negative electrode current-collecting plate 902A, a peeling edge will sequentially move to different positions where new side weld marks 116 need to be peeled during the movement process. After folding begins, the folded portion of the negative electrode current-collecting plate 902A may obtain kinetic energy for outward folding, making it possible to overcome the gradually increased peeling force.

In this embodiment, the above central weld mark 114 and side weld marks 116 are all straight line weld marks, and a width of a single straight line weld mark is W≤1 mm. By using straight line weld marks within the above width range, the peeling force required in the initial stage of peeling may be made smaller, and as the peeling process proceeds, because the width of the weld marks is small, when the front edge of the peeling portion moves to a new weld mark each time during the peeling process, the increase in the peeling force brought about is also small, facilitating gradual advancement of the peeling process. In addition, because the line width of the straight line weld marks remains substantially unchanged, the magnitude of the peeling force contributed by a single weld mark during the peeling process remains substantially unchanged. Therefore, by using multiple straight line weld marks in combination, while taking into account welding reliability, the peeling force during the peeling process may generate a smooth gradient of peeling force that increases progressively during the peeling process, making the peeling process more likely to proceed in the expected manner.

Through the above method, in the secondary battery 500 provided by this embodiment, when the explosion-proof valve 904 opens, as long as two tearable portions 108 are torn, four blades 106 may be completely opened, and the processes of tearing, folding, and peeling the negative tab 716 are all smoother and more seamless, thereby more reliably achieving efficient pressure release when the secondary battery 500 encounters extreme conditions.

### <Second Embodiment>

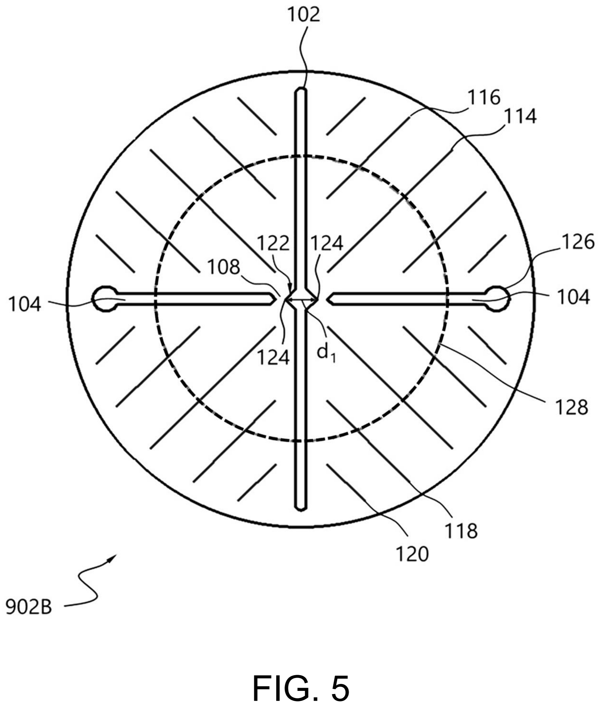

FIG. 5 is a structural schematic diagram of a negative electrode current-collecting plate 902B of a secondary battery 500 provided by the second embodiment of the present disclosure.

Referring to FIG. 5, the structure of the negative electrode current-collecting plate 902B provided by the second embodiment differs from the structure of the negative electrode current-collecting plate 902A provided by the first embodiment mainly in that: in the second embodiment, the first opening 102 is provided with a central opening 122 at a position corresponding to the center of the negative electrode current-collecting plate 902B, the central opening 122 has two corners 124, and the two corners 124 respectively face the end portions of the two second openings 104 close to the first opening 102. By arranging the corners 124, stress concentration at the tear initiation end (i.e., an inner end portion along a radial direction of the tearable portion 108) of the tearable portion 108 may be increased, making the tearable portion 108 easier to tear. Moreover, the configuration of the corners 124 is designed to promote the tearing of the tearable portion 108 in a manner that aligns more closely with a line connecting the central opening 122 to the end portions of the second openings 104.

A connecting line distance between the two corners 124 is a radial dimension d₁ of the central opening 122. In this embodiment, the radial dimension of the central opening 122 is d₁≥8 mm. Due to the presence of the sharp corners 124, the mold used for processing such negative electrode current-collecting plate 902B is prone to edge wear and cracking during the processing process. By configuring the radial dimension d₁ of the central opening 122 to be d₁≥8 mm, the service life of the mold used for processing the negative electrode current-collecting plate 902B may be effectively improved, avoiding the increase of foreign matter caused by mold wear.

In this embodiment, an opening angle θ of the corners 124 is 90°. In some embodiments of the present disclosure, the opening angle θ of the corners 124 may also be other reasonable values satisfying the following condition: 45°≤θ≤90°. The opening angle of the corners 124 should not be too large or too small. An excessively large corner 124 makes it difficult to concentrate stress, and an excessively small corner 124 makes it inconvenient for processing. The corners 124 within the above range may balance both stress concentration and processing feasibility.

In addition, in this embodiment, an outer end along a radial direction of the second openings 104 is further provided with a positioning hole 126. Since the negative electrode current-collecting plate 902B provided in the embodiments of the present disclosure has a relatively center-symmetric and axially symmetric structure, by arranging the positioning hole 126 at the outer end along the radial direction of the second openings 104, on one hand, the positioning hole 126 may be integrally processed with the second openings 104, making it more convenient for processing, and on the other hand, the positioning hole 126 may assist positioning during the welding process, improving the positioning effect of the process of welding the negative tab 716 and the negative electrode current-collecting plate 902B. In some embodiments, the positioning hole 126 may also be a positioning hole 126 that facilitates pallet positioning of the negative electrode current-collecting plate 902B during transportation, or may have positioning functions in both welding and transportation processes. Additionally, in this embodiment, the positioning hole 126 is disposed at the outer end of the second openings 104 along the radial direction of the negative electrode current-collecting plate 902B as an example for illustration. In other embodiments, the positioning hole 126 may also be disposed at other reasonable positions of the negative electrode current-collecting plate 902B, which is not limited by the present disclosure.

In this embodiment, corresponding to the corners 124, the shape of the end portions of the second openings 104 close to the first opening 102 is a sharp angle arranged opposite to the corners 124. The sharp angle may increase the stress concentration of the tearable portion 108, further guiding the tearing direction of the tearable portion 108 and making the tearable portion 108 easier to tear.

Through the above method, the negative electrode current-collecting plate 902B provided by the second embodiment is provided with the central opening 122 having the corners 124, thereby utilizing the feature that the corners 124 may concentrate stress, so that the tearable portion 108 is easier to tear, and guidance may be formed for the tearing direction.

### <Third Embodiment>

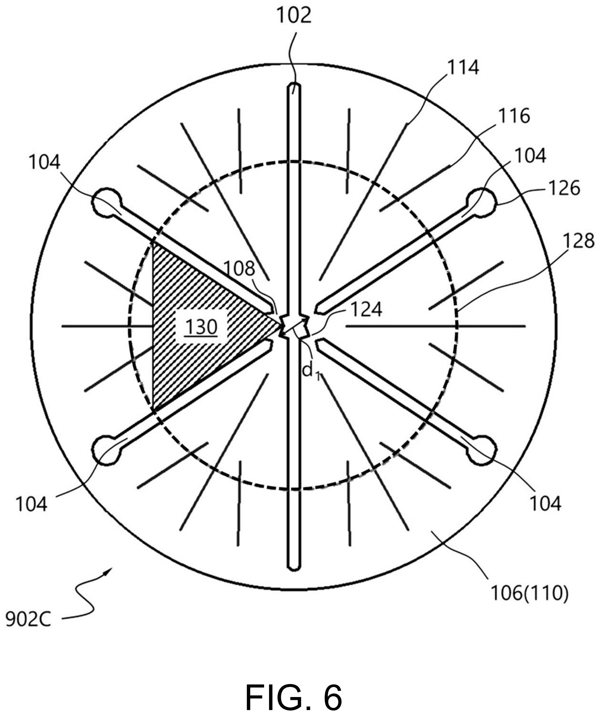

FIG. 6 is a structural schematic diagram (front view) of a negative electrode current-collecting plate 902C of a secondary battery provided by the third embodiment of the present disclosure.

Referring to FIG. 6, the structure of the negative electrode current-collecting plate 902C provided by the third embodiment differs from the structures of the negative electrode current-collecting plate 902B provided by the first embodiment and the second embodiment mainly in that: in the third embodiment, the negative electrode current-collecting plate 902C has four second openings 104 extending along a radial direction of the negative electrode current-collecting plate 902C. An angle between the second openings 104 is 60°, and an angle between the first opening 102 and the second openings 104 is also 60°. The first opening 102 and the second openings 104 together uniformly divide the negative electrode current-collecting plate 902C into 6 circumferential regions along the circumferential direction, i.e., 6 blades 106 that may separately fold and peel from the negative tab 716 after the tearable portion 108 is completely torn.

The explosion-proof valve 904 is obtained by making circular scoring or grooves in the center of the cover plate 604 (or end wall), and a projection area of the explosion-proof valve 904 on the negative electrode current-collecting plate 902C along a Z direction is an explosion-proof valve projection range 128, i.e., the range shown by the dashed line in FIG. 6. In this embodiment, the outer end portions along the radial direction of both the first opening 102 and the second openings 104 extend beyond the explosion-proof valve projection range 128. In other words, both the first opening 102 and the second openings 104 extend radially outward to the outside of the explosion-proof valve projection range 128, thereby maximizing the use of the area of the explosion-proof valve 904 as a pressure-releasing channel and increasing the cross-sectional dimension of the pressure-releasing channel.

On the other hand, because both the first opening 102 and the second openings 104 extend radially outward to the outside of the explosion-proof valve projection range 128, a maximum opening angle/area when the 6 blades 106 open will be limited by the edge of the explosion-proof valve 904. Taking the blade 106 on the left side of FIG. 6 as an example, the maximum opening area of each blade 106 is actually an area shown by a shaded portion 130 in FIG. 6. Compared to the condition of division into 4 blades 106 in the first embodiment and the second embodiment, although an arc length of each blade 106 decreases after the blades are divided into 6 blades 106, a ratio of a sum of the maximum opening areas of all blades 106 to an area of the explosion-proof valve projection range 128 is actually larger. Although in other embodiments, the quantity of blades 106 may further be a value greater than 6, as the quantity of blades 106 increases, the processing difficulty of the current-collecting plate will increase significantly, while the improvement of the sum of maximum opening areas is not very obvious. Moreover, an average quantity of tearable portions 108 that need to be torn for folding each blade 106 will also increase accordingly. Therefore, preferably, the quantity of blades 106 is 4 or 6, and the corresponding quantity of second openings 104 is 2 or 4.

In this embodiment, the center of the electrode assembly 700 has an electrode assembly central opening 712, and a diameter of the electrode assembly central opening 712 is d₂. Referring to FIG. 6, in this embodiment, corresponding to the quantity of the second openings 104, the quantity of corners 124 of the central opening 122 is also 4. A connecting line distance between the farthest two corners 124 (i.e., two non-adjacent corners 124) along an outer edge is a radial dimension d₁ of the central opening 122, wherein d₁>d₂. When the explosion-proof valve 904 opens under extreme conditions, the electrode assembly central opening 712 generally and mainly constitutes a channel for pressure-releasing airflow, while the material flow containing electrolyte, particles and other substances mainly eject from the outer periphery of the airflow channel, and the impact force of the material flow is generally greater than that of the airflow. By setting d₁ as d₁>d₂, the material flow may directly impact the corners 124, increasing the impact force on the corners 124, making the tearable portions 108 more easily tear from the corners 124.

In addition, in this embodiment, in each of the weld mark groups 112, one side weld mark 116 is symmetrically arranged on both sides of the central weld mark 114. An extending direction of the side weld marks 116 is inclined to the central weld mark 114 and parallel to the first opening 102 or the second openings 104 adjacent to the side weld marks 116, thereby more uniformly arranging the side weld marks 116 and improving the uniformity of weld distribution.

Through the above configuration, the third embodiment of the present disclosure provides the negative electrode current-collecting plate 902C with a larger sum of maximum opening areas of each blade 106, which may increase the area of the pressure-releasing channel, thereby rapidly releasing pressure, while taking into account the convenience of processing the negative electrode current-collecting plate 902C.

In the above embodiments of the present disclosure, a capacity of the secondary battery 500 is GAh, a total area of weld marks on the negative electrode current-collecting plate 902 is S, and S satisfies S≥G/8 mm². The larger the weld mark area, the larger the area of the conductive current portion between the negative electrode current-collecting plate 902 and the negative tab 716 may be, thereby reducing the contact resistance.

In the above embodiments of the present disclosure, a length d₄ of the tearable portion 108 (referring to FIG. 4), i.e., a distance between the end portions of the second openings 104 close to the first opening 102 and the first opening 102, is limited to d₄<2 mm, so that the tearable portion 108 becomes a relatively easy-to-tear portion.

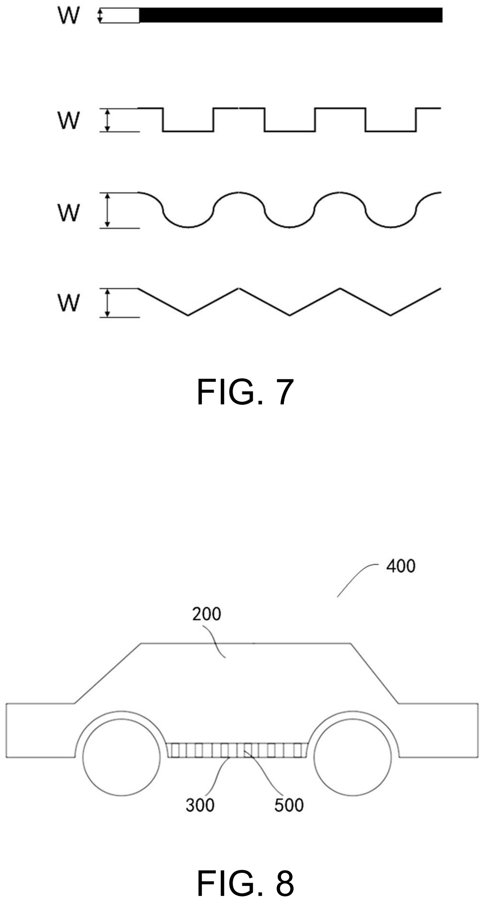

It should be noted that in the above embodiments of the present disclosure, the weld marks in the weld mark group 112 may be straight line weld marks, or may be broken line or curved weld marks, such as wave-shaped weld marks. Referring to FIG. 7, for broken line or curved weld marks, the width W of the weld mark is the feature dimension shown in FIG. 7. By configuring the width of the weld mark to W≤1 mm, it is possible to prevent excessive tensile force between the negative electrode current-collecting plate 902 and the negative tab 716, thereby affecting the folding of the negative electrode current-collecting plate 902.

### <Electronic Device>

FIG. 8 shows a schematic diagram of an electronic device 400 in this embodiment. As shown in FIG. 8, the electronic device 400 includes a battery pack 300 and an operation portion 200 electrically connected to the battery pack 300. As an example, the electronic device 400 is a vehicle, and the vehicle may be a fuel vehicle, a gas vehicle, or a new energy vehicle. The new energy vehicle may be a pure electric vehicle, a hybrid vehicle, or a range-extended vehicle, etc., but is not limited thereto. The operation portion 200 is a vehicle body, the battery pack 300 is disposed at the bottom of the vehicle body, and provides electrical energy support for operation of the vehicle or the operation of electrical components in the vehicle. However, in some other embodiments, the electronic device 400 may also be a mobile phone, a portable device, a laptop computer, a ship, a spacecraft, an electric toy, an electric tool, etc. The spacecraft includes aircraft, rockets, space shuttles, spaceships, etc. The operation portion 200 may be a unit component that may obtain electrical energy from the battery pack 300 and perform corresponding work, such as a fan blade rotation unit, a vacuum cleaner suction working unit, etc. Electric toys include fixed or mobile electric toys, for example, game consoles, electric car toys, electric ship toys, electric airplane toys, etc. Electric tools include metal cutting electric tools, grinding electric tools, assembly electric tools, and railway electric tools, for example, electric drills, electric grinders, electric wrenches, electric screwdrivers, electric hammers, impact drills, concrete vibrators, electric planers, etc. The embodiments of the present disclosure do not impose special restrictions on the above electronic device 400.

## Claims

1. A secondary battery (500), comprising:
a housing (600), comprising an end wall, wherein an explosion-proof valve (904) is disposed on the end wall;
an electrode assembly (700), accommodated in the housing (600), wherein a tab (716) is extended from one end of the electrode assembly (700) facing the explosion-proof valve (904);
a current-collecting plate (902, 902A, 902B, 902C), disposed between the end wall and the tab (716) and welded with the tab (716), wherein
the current-collecting plate (902, 902A, 902B, 902C) comprises a first opening (102) and a plurality of second openings (104), the first opening (102) passes through a center of the current-collecting plate and extends along a radial direction of the current-collecting plate (902, 902A, 902B, 902C), the plurality of second openings (104) are distributed on both sides of the first opening (102),
a portion between end portions of the plurality of second openings (104) close to the first opening (102) and the first opening (102) constitutes a tearable portion (108) of the current-collecting plate (902, 902A, 902B, 902C), the tearable portion (108) is configured such that, when an internal pressure of the secondary battery (500) increases and releases pressure through the explosion-proof valve (904), the current-collecting plate (902, 902A, 902B, 902C) tears at the tearable portion (108) and folds toward a direction away from the electrode assembly (700).

2. The secondary battery (500) according to claim 1, wherein the current-collecting plate (902, 902A, 902B, 902C) has two of the plurality of second openings (104) extending along the radial direction of the current-collecting plate (902, 902A, 902B, 902C), and the first opening (102) and the plurality of second openings (104) divide the current-collecting plate (902, 902A, 902B, 902C) into four circumferential regions (110) that are foldable separately; or
the current-collecting plate (902, 902A, 902B, 902C) has four of the plurality of second openings (104) extending along the radial direction of the current-collecting plate (902, 902A, 902B, 902C), and the first opening (102) and the plurality of second openings (104) divide the current-collecting plate (902, 902A, 902B, 902C) into six circumferential regions (110) that are foldable separately.

3. The secondary battery (500) according to any one of claims 1-2, wherein the first opening (102) has a central opening (122) at a position corresponding to the center of the current-collecting plate (902, 902A, 902B, 902C), the central opening (122) has a plurality of corners (124), and the plurality of corners (124) are respectively disposed toward the end portions of the plurality of second openings (104) close to the first opening (102).

4. The secondary battery (500) according to claim 3, wherein a maximum straight line distance between outer edges of the plurality of corners (124) is a radial dimension d₁ of the central opening (122), and the radial dimension of the central opening (122) is d₁≥8 mm.

5. The secondary battery (500) according to claim 4, wherein an opening angle of each of the plurality of corners (124) is θ, and 45°≤θ≤90°.

6. The secondary battery (500) according to claim 3, wherein a center of the electrode assembly (700) comprises an electrode assembly central opening (712), a diameter of the electrode assembly central opening (712) is d₂, with a maximum straight line distance between outer edges of the plurality of corners (124) as a radial dimension d₁ of the central opening (122) of the current-collecting plate (902, 902A, 902B, 902C), wherein d₁>d₂.

7. The secondary battery (500) according to claim 1, wherein a plurality of weld marks are formed by welding between the current-collecting plate (902, 902A, 902B, 902C) and the tab (716), the first opening (102) and the plurality of second openings (104) divide the current-collecting plate (902, 902A, 902B, 902C) into a plurality of circumferential regions (110) along a circumferential direction, the plurality of weld marks located in each of the plurality of circumferential regions (110) form a weld mark group (112), and a width of each of the plurality of weld marks is W≤1 mm.

8. The secondary battery (500) according to claim 7, wherein the plurality of weld marks comprise a plurality of straight line weld marks.

9. The secondary battery (500) according to claim 8, wherein each of the weld mark groups (112) comprises a central weld mark (114) and a plurality of side weld marks (116), with the central weld mark (114) disposed at a center of the plurality of circumferential regions (110) along the circumferential direction, and the plurality of side weld marks (116) symmetrically distributed on both sides of the central weld mark (114).

10. The secondary battery (500) according to claim 9, wherein in each of the plurality of weld mark groups (112), a distance between an inner end portion along a radial direction of the central weld mark (114) and the central opening (122) is smaller than a distance between any of the plurality of side weld marks (116) and the central opening (122), and a length of the central weld mark (114) is d₃≥10 mm.

11. The secondary battery (500) according to claim 7, wherein a capacity of the secondary battery (500) is G Ah, a total area of the plurality of weld marks is S, and S≥G/8 mm².

12. The secondary battery (500) according to claim 1, wherein a projection area of the explosion-proof valve (904) on the current-collecting plate (902, 902A, 902B, 902C) along a height direction of the secondary battery (500) is an explosion-proof valve projection range (128), and both the first opening (102) and the plurality of second openings (104) extend outward along the radial direction of the current-collecting plate (902, 902A, 902B, 902C) to an outside of the explosion-proof valve projection range (128).

13. The secondary battery (500) according to claim 1, wherein the current-collecting plate (902, 902A, 902B, 902C) further has a positioning hole (126), the positioning hole (126) is disposed at an outer end of the plurality of second openings (104) along the radial direction of the current-collecting plate (902, 902A, 902B, 902C).

14. The secondary battery (500) according to claim 1, wherein a length of the tearable portion (108) is d₄<2mm.

15. An electronic device (400), wherein the electronic device has the secondary battery (500) according to any one of claims 1-14.
